# EUROPEAN PATENT APPLICATION

(11) **EP 4 318 967 A1**
(43) Date of publication of application: **07.02.2024**
(21) Application number: 21932151.0
(22) Date of filing: 24.03.2021
(51) Int. Cl.: H04B 7/06, H04B 7/10

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2021/082820
(87) International publication number: WO 2022/198523

(57) **Abstract**

Embodiments of the present disclosure relate to an information transmission method and apparatus, a communication device, and a storage medium. The method comprises: a base station sends first polarization configuration information to a user equipment (UE), wherein the polarization configuration information is used for indicating antenna polarization configuration associated with data transmission.

## Description

### TECHNICAL FIELD

The present disclosure relates to, but is not limited to, a wireless communication technical field, and more particularly to an information transmission method and apparatus, a communication device, and a storage medium.

### BACKGROUND

In the research of wireless cellular mobile communication technology, satellite communication is considered to be an important aspect of the future development of the wireless cellular mobile communication technology. The satellite communication refers to communication carried out by wireless cellular mobile communication devices on the ground using satellites as relays. A satellite communication system consists of satellites and ground components. The satellite communication has a large communication range, may communicate as long as in the area covered by radio waves emitted by the satellite, and is not easily affected by the land environment and disasters. The satellite communications may serve as an effective supplement to current wireless cellular mobile communications on the ground.

### SUMMARY

In view of this, the present disclosure provides an information transmission method, an information transmission apparatus, a communication device and a storage medium.

According to a first aspect of the present disclosure, an information transmission method is provided. The method is performed by a first base station and includes:
sending first polarization configuration information to a user equipment (UE), in which the polarization configuration information is configured to indicate an antenna polarization configuration associated with a data transmission.

In one embodiment, the first polarization configuration information is configured to indicate at least one of:
an antenna polarization configuration for a downlink data transmission;
an antenna polarization configuration for an uplink data transmission.
In one embodiment, the antenna polarization configuration includes at least one of:
linear polarization;
left hand circular polarization (LHCP);
right hand circular polarization (RHCP);
circular polarization.

In one embodiment, sending the first polarization configuration information to the UE includes one of:
sending a main information block (MIB) carrying the first polarization configuration information to the UE;
sending a system message carrying the first polarization configuration information to the UE;
sending a high-layer signaling carrying the first polarization configuration information to the UE;
sending a first initial access message carrying the first polarization configuration information to the UE;
sending a physical layer signaling carrying the first polarization configuration information to the UE.

In one embodiment, in response to sending the MIB or the system message carrying the first polarization configuration information, the first polarization configuration information is configured to indicate antenna polarization configurations of one or more service beams.

In one embodiment, the method further includes:
determining an antenna polarization configuration of a cell associated with the first base station based on an antenna polarization configuration of a cell associated with a second base station in response to the cell associated with the first base station having overlapping coverage areas with the cell associated with the second base station.

In one embodiment, the method further includes:
receiving, from the second base station, indication information indicating the antenna polarization configuration of the cell associated with the second base station.

In one embodiment, receiving, from the second base station, the indication information indicating the antenna polarization configuration of the cell associated with the second base station includes at least one of:
receiving the indication information via an inter-base-station interface;
receiving the indication information via an inter-satellite communication link (ISL) associated with the first base station.

In one embodiment, the method further includes:
receiving second polarization configuration information from the UE;
determining an antenna polarization capability of the UE according to the second polarization configuration information;
determining the antenna polarization configuration based on the antenna polarization capability reported by at least one UE in the cell associated with the first base station.

In one embodiment, determining the antenna polarization configuration based on the antenna polarization capability reported by at least one UE in the cell associated with the first base station includes:
determining the antenna polarization configuration based on a proportion of the UEs with the same antenna polarization capability in the cell associated with the first base station.

In one embodiment, receiving the second polarization configuration information from the UE includes:
receiving a second initial access message carrying the second polarization configuration information.

In one embodiment, the method further includes:
sending reporting trigger information.

Receiving the second polarization configuration information from the UE includes:
receiving the second polarization configuration information sent by the UE in response to the trigger information.

According to a second aspect of the present disclosure, an information transmission method is provided. The method is performed by a user equipment (UE) and includes:
receiving first polarization configuration information from a first base station;
determining an antenna polarization configuration associated with a data transmission according to the first polarization configuration information.

In one embodiment, determining the antenna polarization configuration associated with the data transmission according to the first polarization configuration information includes:
according to the first polarization configuration information, determining at least one of:
an antenna polarization configuration for a downlink data transmission;
an antenna polarization configuration for an uplink data transmission.

In one embodiment, the method further includes:
determining the antenna polarization configuration for the downlink data transmission as the antenna polarization configuration for the uplink data transmission.

In one embodiment, the method further includes:
detecting an antenna polarization configuration for a predetermined downlink signal;
determining the detected antenna polarization configuration for the predetermined downlink signal as the antenna polarization configuration for the data transmission.

In one embodiment, the antenna polarization configuration includes at least one of:
linear polarization;
left hand circular polarization (LHCP);
right hand circular polarization (RHCP);
circular polarization.

In one embodiment, receiving the first polarization configuration information from the first base station includes one of:
receiving a main information block (MIB) carrying the first polarization configuration information;
receiving a system message carrying the first polarization configuration information;
receiving a high-layer signaling carrying the first polarization configuration information;
receiving a first initial access message carrying the first polarization configuration information;
receiving a physical layer signaling carrying the first polarization configuration information.

In one embodiment, in response to receiving the MIB or the system message carrying the first polarization configuration information, determining the antenna polarization configuration associated with the data transmission according to the first polarization configuration information includes:
determining antenna polarization configurations of one or more service beams according to the first polarization configuration information.

In one embodiment, the method further includes:
sending second polarization configuration information, wherein the second polarization configuration information is configured to indicate an antenna polarization capability of the UE.

In one embodiment, sending the second polarization configuration information includes:
sending a second initial access message carrying the second polarization configuration information.

In one embodiment, the method further includes:
receiving reporting trigger information.

Sending the second polarization configuration information includes:
sending the second polarization configuration information in response to receiving the trigger information.

According to a third aspect of the present disclosure, an information transmission apparatus is provided. The apparatus is applied to a first base station and includes:
a first sending module configured to send first polarization configuration information to a user equipment (UE), in which the polarization configuration information is configured to indicate an antenna polarization configuration associated with a data transmission.

In one embodiment, the first polarization configuration information is configured to indicate at least one of:
an antenna polarization configuration for a downlink data transmission;
an antenna polarization configuration for an uplink data transmission.

In one embodiment, the antenna polarization configuration includes at least one of:
linear polarization;
left hand circular polarization (LHCP);
right hand circular polarization (RHCP);
circular polarization.

In one embodiment, the first sending module includes one of:
a first sending sub-module configured to send a main information block (MIB) carrying the first polarization configuration information to the UE;
a second sending sub-module configured to send a system message carrying the first polarization configuration information to the UE;
a third sending sub-module configured to send a high-layer signaling carrying the first polarization configuration information to the UE;
a fourth sending sub-module configured to send a first initial access message carrying the first polarization configuration information to the UE;
a fifth sending sub-module configured to send a physical layer signaling carrying the first polarization configuration information to the UE.

In one embodiment, in response to sending the MIB or the system message carrying the first polarization configuration information, the first polarization configuration information is configured to indicate antenna polarization configurations of one or more service beams.

In one embodiment, the apparatus further includes:
a first determining module configured to determine an antenna polarization configuration of a cell associated with the first base station based on an antenna polarization configuration of a cell associated with a second base station in response to the cell associated with the first base station having overlapping coverage areas with the cell associated with the second base station.

In one embodiment, the apparatus further includes:
a first receiving module configured to receive, from the second base station, indication information indicating the antenna polarization configuration of the cell associated with the second base station.

In one embodiment, the first receiving module includes at least one:
a first receiving sub-module configured to receive the indication information via an inter-base-station interface;
a second receiving sub-module configured to receive the indication information via an inter-satellite communication link (ISL) associated with the first base station.

In one embodiment, the apparatus further includes:
a second receiving module configured to receive second polarization configuration information from the UE;
a second determining module configured to determine an antenna polarization capability of the UE according to the second polarization configuration information;
a third determining module configured to determine the antenna polarization configuration based on the antenna polarization capability reported by at least one UE in the cell associated with the first base station.

In one embodiment, the third determining module includes:
a first determining sub-module configured to determine the antenna polarization configuration based on a proportion of the UEs with the same antenna polarization capability in the cell associated with the first base station.

In one embodiment, the second receiving module includes:
a third receiving sub-module configured to receive a second initial access message carrying the second polarization configuration information.

In one embodiment, the apparatus further includes:
a second sending module configured to send reporting trigger information.

The second receiving module includes:
a fourth receiving sub-module configured to receive the second polarization configuration information sent by the UE in response to the trigger information.

According to a fourth aspect of the present disclosure, an information transmission apparatus is provided. The apparatus applied to a user equipment (UE) and includes:
a third receiving module configured to receive first polarization configuration information from a first base station;
a fourth determining module configured to determine an antenna polarization configuration associated with a data transmission according to the first polarization configuration information.

In one embodiment, the fourth determining module includes:
a second determining sub-module configured to, according to the first polarization configuration information, determine at least one of:
an antenna polarization configuration for a downlink data transmission;
an antenna polarization configuration for an uplink data transmission.

In one embodiment, the apparatus further includes:
a fifth determining module configured to determine the antenna polarization configuration for the downlink data transmission as the antenna polarization configuration for the uplink data transmission.

In one embodiment, the apparatus further includes:
a detecting module configured to detect an antenna polarization configuration for a predetermined downlink signal;
a sixth determining module configured to determine the detected antenna polarization configuration for the predetermined downlink signal as the antenna polarization configuration for the data transmission.

In one embodiment, the antenna polarization configuration includes at least one of:
linear polarization;
left hand circular polarization (LHCP);
right hand circular polarization (RHCP);
circular polarization.

In one embodiment, the third receiving module includes one of:
a fifth receiving sub-module configured to receive a main information block (MIB) carrying the first polarization configuration information;
a sixth receiving sub-module configured to receive a system message carrying the first polarization configuration information;
a seventh receiving sub-module configured to receive a high-layer signaling carrying the first polarization configuration information;
an eighth receiving sub-module configured to receive a first initial access message carrying the first polarization configuration information;
a ninth receiving sub-module configured to receive a physical layer signaling carrying the first polarization configuration information.

In one embodiment, in response to receiving the MIB or the system message carrying the first polarization configuration information, the fourth determining module includes:
a third determining sub-module configured to determine antenna polarization configurations of one or more service beams according to the first polarization configuration information.

In one embodiment, the apparatus further includes:
a third sending module configured to send second polarization configuration information, wherein the second polarization configuration information is configured to indicate an antenna polarization capability of the UE.

In one embodiment, the third sending module includes:
a sixth sending sub-module configured to send a second initial access message carrying the second polarization configuration information.

In one embodiment, the apparatus further includes:
a fourth receiving module configured to receive reporting trigger information.

The third sending module includes:
a seventh sending sub-module configured to send the second polarization configuration information in response to receiving the trigger information.

According to a fifth aspect of the present disclosure, a communication device is provided. The communication device includes a processor; a memory; and executable programs stored on the memory and runnable on the processor. The processor executes steps in the information transmission method according to the first aspect and the second aspect when running the executable programs.

According to a sixth aspect of the present disclosure, a storage medium is provided. The storage medium has stored therein executable programs that, when executed by a processor, cause steps of the information transmission method according to the first aspect and the second aspect to be implemented.

Embodiments of the present disclosure provide the information transmission method, the information transmission apparatus, the communication device, and the storage medium. The base station sends the first polarization configuration information to the UE. The polarization configuration information is configured to indicate the antenna polarization configuration associated with the data transmission. In this way, by sending the first polarization configuration information to the UE, the uplink data transmission and/or the downlink data transmission between the UE and the satellite are consistent in the antenna polarization configuration, which reduces the situations where data transmission failure or bit error caused by the inconsistent antenna polarization configuration of the data transmission of the UE and the satellite, and improves the quality of data transmission.

It is understood that both the foregoing general description and the following detailed description are illustrative and explanatory only, and are not intended to limit embodiments of the present disclosure.

### BRIEF DESCRIPTION OF THE DRAWINGS

The accompanying drawings, which are incorporated in and constitute a part of this specification, illustrate embodiments consistent with the present disclosure and together with the specification serve to explain principles of embodiments of the present disclosure.
FIG. 1 is a schematic diagram illustrating a wireless communication system according to an illustrative embodiment.
FIG. 2 is a schematic flowchart illustrating an information transmission method according to an illustrative embodiment.
FIG. 3 is a schematic flowchart illustrating another information transmission method according to an illustrative embodiment.
FIG. 4 is a block diagram illustrating an information transmission apparatus according to an illustrative embodiment.
FIG. 5 is a block diagram illustrating another information transmission apparatus according to an illustrative embodiment.
FIG. 6 is a block diagram illustrating a device for information transmission according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to embodiments of the disclosure as recited in the appended claims.

Terms used in embodiments of the present disclosure are for describing some embodiments only, and are not intended to limit the embodiments of the present disclosure. As used in embodiments of the present disclosure and the appended claims, "a/an" and "the" in singular forms are also intended to include plural forms unless the context clearly indicates otherwise. It could also be understood that the term "and/or" as used herein refers to and includes any and all possible combinations of one or more associated listed items.

It could be understood that although the embodiments of the present disclosure may use the terms "first", "second", "third", etc. to describe various information, but the information is not limited to these terms. These terms are only used to distinguish information of the same type from each other. For example, without departing from the scope of embodiments of the present disclosure, first information may also be called second information, and similarly second information may also be called first information. Depending on the context, the word "if' as used herein may be interpreted as "upon" or "when" or "in response to determining".

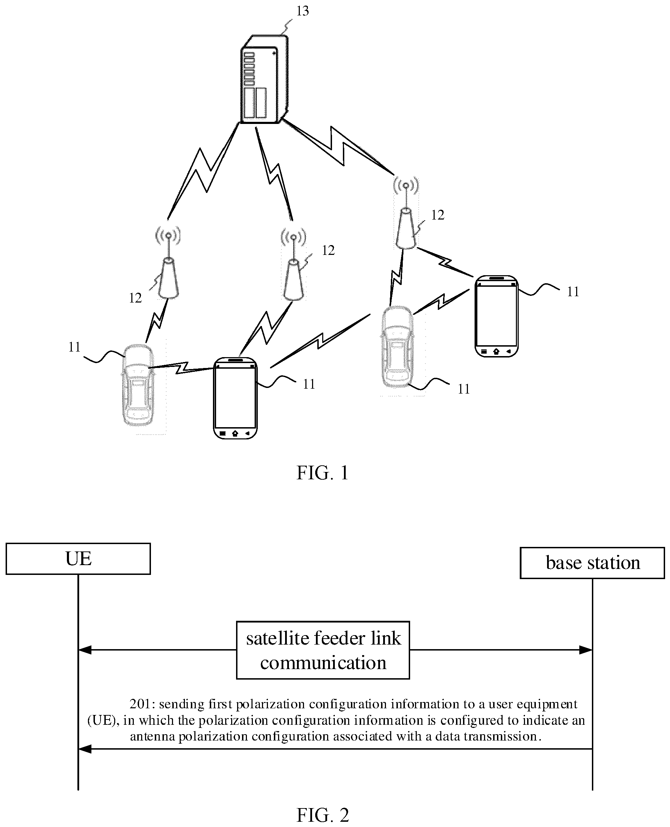

FIG. 1 is a schematic diagram illustrating a wireless communication system according to an illustrative embodiment. As shown in FIG. 1, the wireless communication system is a communication system based on a cellular mobile communication technology, and the wireless communication system may include a plurality of terminals 11 and a plurality of base stations 12.

The terminal 11 may be a device that provides voice and/or data connectivity to a user. The terminal 11 may communicate with one or more core networks via a radio access network (RAN). The terminal 11 may be an Internet of Things terminal, such as a sensor device, a mobile phone (or called a "cellular" phone) and a computer having an Internet of Things terminal. For example, the terminal 11 may be a fixed, portable, pocket, hand-held, built-in computer or vehicle-mounted device. For example, the terminal 11 may be a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may be a device of an unmanned aerial vehicle. Alternatively, the terminal 11 may be a vehicle-mounted device, for example, a trip computer with a wireless communication function, or a wireless communication device externally connected to the trip computer. Alternatively, the terminal 11 may also be a roadside device, for example, it may be a street lamp, a signal lamp, or other roadside devices with a wireless communication function.

The base station 12 may be a network side device in a wireless communication system. The wireless communication system may be the fourth generation mobile communication technology (4G) system, also known as a long term evolution (LTE) system. Alternatively, the wireless communication system may also be the fifth generation mobile communication technology (5G) system, also called a new radio (NR) system or 5G NR system. Alternatively, the wireless communication system may also be a next generation system of the 5G system. An access network in the 5G system may be called a new generation-radio access network (NG-RAN). Alternatively, the wireless communication system may also be a MTC system.

The base station 12 may be an evolved base station (eNB) adopted in a 4G system. Alternatively, the base station 12 may also be a central distributed architecture base station (gNB) in the 5G system. When the base station 12 adopts a central distributed architecture, the base station 12 generally includes a central unit (CU) and at least two distributed units (DU). The central unit is provided with a protocol stack of a packet data convergence protocol (PDCP) layer, a radio link control (RLC) layer, or a media access control (MAC) layer. A protocol stack of a physical (PHY) layer is provided in the distributed unit. The specific implementation manner of the base station 12 is not be limited in embodiments of the present disclosure.

A wireless connection may be established between the base station 12 and the terminal 11 through a wireless air interface. In some embodiments, the wireless air interface is a wireless air interface based on the fourth generation mobile communication network technology (4G) standard. Alternatively, the wireless air interface is a wireless air interface based on the fifth generation mobile communication network technology (5G) standard. For example, the wireless air interface is a new radio. Alternatively, the wireless air interface may also be a wireless air interface based on a next generation mobile communication network technology standard based on 5G.

In some embodiments, an E2E (end to end) connection may also be established between terminals 11, such as a V2V (vehicle to vehicle) communication, a V2I (vehicle to infrastructure) communication and a V2P (vehicle to pedestrian) communication in vehicle to everything (V2X) communication scenes.

In some embodiments, the above-mentioned wireless communication system may further include a network management device 13.

The plurality of base stations 12 are connected to the network management device 13 respectively. The network management device 13 may be a core network device in the wireless communication system. For example, the network management device 13 may be a mobility management entity (MME) in an evolved packet core network (EPC). Alternatively, the network management device may also be other core network devices, such as a serving gate way (SGW), a public data network gateway (PGW), a policy and charging rules function unit (PCRF) or a home subscriber server (HSS). The implementation form of the network management device 13 is not limited in embodiments of the present disclosure.

The execution subject involved in embodiments of the present disclosure include, but are not limited to: satellites that realize non-terrestrial cellular mobile communication network coverage, user equipment such as mobile terminals that use cellular mobile communication network technology for wireless communication, base stations, and the like.

An application scenario of embodiments of the present disclosure is that since satellites work in space far away from the earth's atmosphere, the transmission of signals is affected by the ionosphere, rain and fog layers, etc. How to design an antenna system is a key related to whether the satellite may work normally.

The common linearly polarized antennas will be affected by electromagnetic interference when passing through the ionosphere, resulting in the deflection of the polarization direction, or causing bit errors caused by weather factors such as rain and fog. In the satellite communication, a circular polarization antenna may be used as a medium for signal transmission and reception.

When the electric wave is transmitted in space, the instantaneous direction of its electric field vector is called as polarization. If the trajectory of the electric field vector in space is circular, that is, the electric field vector rotates along the axis of the propagation direction, it is called circular polarization. In general, the circular polarization is divided into left-hand circular polarization (LHCP) and right-hand circular polarization (RHCP).

For non-terrestrial cellular mobile communication networks, due to the limitation of the UE antenna polarization capability, if the UE does not support the antenna polarization configuration used by the satellite to send signals, signal reception failure or bit errors will occur. Therefore, how to coordinate the satellite and the antenna polarization configuration between UEs is an issue that needs to be solved urgently.

As shown in FIG. 2, embodiments of the present disclosure provide an information transmission method, which is applied to a first base station of a wireless communication, and includes:
step 201: sending first polarization configuration information to the UE. The polarization configuration information is configured to indicate an antenna polarization configuration associated with a data transmission.

The UE may be a mobile phone terminal that uses cellular mobile communication network technology for NTN wireless communication, etc. The UE may communicate with the base station via the communication connection between high-altitude platforms such as satellites and satellite ground stations such as gateways. Here, the first base station may be a serving base station of the UE.

The satellite may be a serving satellite that establishes a communication connection between the first base station and the UE. The serving satellite may transmit the communication data between the first base station and the UE via transparent transmission or other processes. At the same time, the UE may communicate with the base station through one or more serving satellites.

The satellites provide a signal coverage to the ground. The UE performs data transmission with the first base station through the satellite. The first base station may send the first polarization configuration information to the UE through a satellite in the communication connection.

The antenna polarization configuration associated with the data transmission may include, but is not limited to: the antenna polarization configuration adopted by the satellite and/or the UE when the UE performs data transmission with the satellite in the communication connection.

In one embodiment, the antenna polarization configuration includes at least one of linear polarization, left hand circular polarization (LHCP), right hand circular polarization (RHCP), or circular polarization.

For example, the first polarization configuration information may be indicated by a predefined bit length. For example, when the antenna polarization configuration includes four configurations of the linear polarization, LHCP, RHCP and the circular polarization, the first polarization configuration information may be indicated by two bits of information. When there are more configuration types of antenna polarization configurations, more bits may be used to indicate the first polarization configuration information, and the bit length of the indication information may be configured based on supported antenna polarization configurations.

The UE may determine the antenna polarization configuration for the data communication between the satellite and the UE based on the antenna polarization configuration information, such that the antenna polarization configuration for the data transmission between the satellite and the UE is consistent. The satellite and the UE may use the same antenna polarization configuration to send and receive the data.

In this way, by sending the first polarization configuration information to the UE, on the one hand, the antenna polarization configuration indicating the data transmission is realized to the UE; on the other hand, the communication between the UE and the satellite is consistent in the antenna polarization configuration, which reduces the situations where data transmission failure or bit error caused by the inconsistent antenna polarization configuration of the data transmission of the UE and the satellite, and improves the quality of data transmission.

In one embodiment, the first polarization configuration information is configured to indicate at least one of:
an antenna polarization configuration for a downlink data transmission;
an antenna polarization configuration for an uplink data transmission.

The first polarization configuration information may individually indicate the antenna polarization configuration for the downlink data transmission or the antenna polarization configuration for the uplink data transmission, or may simultaneously indicate the antenna polarization configuration for the downlink data transmission and the antenna polarization configuration for the uplink data transmission.

The UE receives the first polarization configuration information to determine the antenna polarization configuration for the downlink data transmission and/or the antenna polarization configuration for the uplink data transmission.

The UE may receive downlink data based on the antenna polarization configuration for the downlink data transmission. The UE may send uplink data based on the antenna polarization configuration for the uplink data transmission.

Here, the downlink data received by the UE may be transmitted by the first base station through the satellite. The UE may send uplink data to the first base station through the satellite transmission.

In this way, by sending the first polarization configuration information to the UE, the uplink data transmission and/or the downlink data transmission between the UE and the satellite are consistent in the antenna polarization configuration, which reduces the situations where data transmission failure or bit error caused by the inconsistent antenna polarization configuration of the data transmission of the UE and the satellite, and improves the quality of data transmission.

In one embodiment, sending the first polarization configuration information to the UE includes one of:
sending a main information block (MIB) carrying the first polarization configuration information to the UE;
sending a system message carrying the first polarization configuration information to the UE;
sending a high-layer signaling carrying the first polarization configuration information to the UE;
sending a first initial access message carrying the first polarization configuration information to the UE;
sending a physical layer signaling carrying the first polarization configuration information to the UE.

For example, in the initial access stage, the first base station may carry the first polarization configuration information through the MIB or the system information to indicate the antenna polarization configuration.

Here, the first initial access message may include, but is not limited to, message 2 (MSG2) sent by the base station when the UE performs initial access. In the initial access stage, the first base station may also use the MSG2 to carry the first polarization configuration information to indicate the antenna polarization configuration. In this way, after the UE sends the preamble, the UE determines the antenna polarization configuration for the downlink data transmission by receiving the first polarization configuration information carried by the MSG2. The antenna polarization configuration for the preamble sent by the UE may be predefined or notified by the base station through system information.

After the initial access stage, after the UE completes the initial access process, the base station may dynamically switch the antenna polarization configuration for the data transmission. The first base station may notify the antenna polarization configuration of this data transmission through the physical layer signaling and/or the high-layer signaling. Here, the physical layer signaling may include DCI and so on. For example, the first base station may add first polarization configuration information with a predetermined length or a configurable length on an information field at a predetermined position of the DCI for scheduling data transmission, so as to indicate the antenna polarization configuration of the UE. Here, the data transmission may include the uplink data transmission and/or the downlink data transmission.

In one embodiment, in response to sending the MIB or the system message carrying the first polarization configuration information, the first polarization configuration information is configured to indicate antenna polarization configurations of one or more service beams.

The system information here may include system information block (SIB), etc.

When a service area of the first base station is configured with a plurality of beams, the MIB or the system information may include the antenna polarization configurations for the data transmission on one or more service beams.

For example, the MIB or the SIB information sent on a serving beam may carry the antenna polarization configurations on all serving beams of the serving cell, and the configuration information indicating the polarization direction on each service beam may be the same or different.

In another embodiment, the MIB or the SIB sent on each service beam may only carry the antenna polarization configuration of this service beam.

In one embodiment, the method further includes:
determining an antenna polarization configuration of a cell associated with the first base station based on an antenna polarization configuration of a cell associated with a second base station in response to the cell associated with the first base station having overlapping coverage areas with the cell associated with the second base station.

The cell associated with the first base station may be a cell formed by signal coverage of the first base station. The cell associated with the first base station may be a cell formed by the first base station through satellite signal coverage. There may be one or more cells associated with the first base station.

The second base station is different from the first base station. The cell associated with the second base station may be a cell formed by the signal coverage of the second base station. The cell associated with the second base station may be a cell formed by the second base station through satellite signal coverage. There may be one or more cells associated with the second base station.

The antenna polarization configuration of the cell associated with the first base station may be different from the antenna polarization configuration of the cell associated with the second base station. In this way, mutual interference between a signal of the cell associated with the first base station and a signal the cell associated with the second base station may be reduced.

In one embodiment, the method further includes:
receiving, from the second base station, indication information indicating the antenna polarization configuration of the cell associated with the second base station.

The first base station may receive inter-base station signaling interaction from the second base station to determine the antenna polarization configuration for uplink data transmission and/or the antenna polarization configuration for the downlink data transmission in the cell associated with the second base station. The indication information indicating the antenna polarization configuration of the cell associated with the second base station may be carried in the inter-base station signaling and sent to the first base station.

In one embodiment, receiving, from the second base station, the indication information indicating the antenna polarization configuration of the cell associated with the second base station includes at least one of:
receiving the indication information via an inter-base-station interface;
receiving the indication information via an inter-satellite communication link (ISL) associated with the first base station.

The first base station obtains and determines the antenna polarization configuration of the cell associated with the second base station via a wired or wireless interface between the base stations, and then determines the antenna polarization configuration of the cell associated with the first base station.

The first base station may also establish a transmission connection with the second base station via the ISL between the satellite in its own communication connection and the satellite in communication connection of the second base station, and receive the indication information indicating the antenna polarization configuration sent by the second base station through the established transmission connection.

In one embodiment, the method further includes:
receiving second polarization configuration information from the UE;
determining an antenna polarization capability of the UE according to the second polarization configuration information;
determining the antenna polarization configuration based on the antenna polarization capability reported by at least one UE in the cell associated with the first base station.

The base station may also determine the polarization configuration of the serving cell of the UE through the antenna polarization capability reported by the UE. The antenna polarization capability may be the antenna polarization configuration that the UE may adopt.

The UE may report the antenna polarization capability through the second polarization configuration information. The base station may determine the antenna polarization configuration that enables the UE to maintain normal traffic based on the polarization capabilities reported by the UE. For example, the UE reports its polarization capability as the LHCP through the second polarization configuration information, and the base station may select the antenna polarization configuration of the serving cell of the UE as the LHCP. Here, the antenna polarization configuration may include: an antenna polarization configuration for an uplink data transmission and/or an antenna polarization configuration for an downlink data transmission.

In one embodiment, determining the antenna polarization configuration based on the antenna polarization capability reported by at least one UE in the cell associated with the first base station includes:
determining the antenna polarization configuration based on a proportion of the UEs with the same antenna polarization capability in the cell associated with the first base station.

If the antenna polarization capability reported by the plurality of UEs in a cell are not exactly the same, the antenna polarization configuration of the cell may be determined based on the antenna polarization capability that account for a larger proportion.

For example, in the polarization capabilities reported by UEs in a certain area, more than a certain proportion of UEs report LHCP, and the base station may configure the LHCP as the polarization configuration in the area for uplink data transmission and/or downlink data transmission.

In one embodiment, receiving the second polarization configuration information from the UE includes:
receiving a second initial access message carrying the second polarization configuration information.

Here, the second initial access message may include, but is not limited to, message 1 (MSG1) and/or message 3 (MSG3) sent by the UE when the UE performs initial access. In the initial access phase, the UE may carry the second polarization configuration information through MSG1 and/or MSG3. The first base station may determine the polarization capability of the UE based on the second polarization configuration information, and determine the antenna polarization configuration.

In one embodiment, the method further includes:
sending reporting trigger information.

Receiving the second polarization configuration information from the UE includes:
receiving the second polarization configuration information sent by the UE in response to the trigger information.

The base station may send the reporting trigger information after establishing a connection with the UE, and the reporting trigger information may indicate resource location and/or signaling format of the second polarization configuration information reported by the UE. The UE reports its own second polarization configuration information based on the reporting trigger information. The UE may report the second polarization configuration information through the resource location and/or the signaling format indicated by the reporting trigger information.

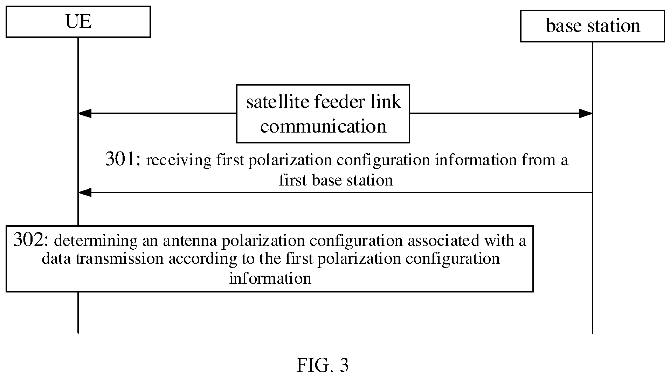

As shown in FIG. 3, illustrative embodiments of the present disclosure provides an information transmission method. The information transmission method may be applied to a UE in a wireless communication and includes:
step 301: receiving first polarization configuration information from a first base station;
step 302: determining an antenna polarization configuration associated with a data transmission according to the first polarization configuration information.

The UE may be a mobile phone terminal that uses cellular mobile communication network technology for NTN wireless communication, etc. The UE may communicate with the base station through the communication connection between high-altitude platforms such as satellites and satellite ground stations such as gateways. Here, the first base station may be the serving base station of the UE.

The satellite may be a serving satellite that establishes a communication connection between the first base station and the UE. The serving satellite may transmit communication data between the first base station and the UE through transparent transmission or other processes. At the same time, the UE may communicate with the base station through one or more serving satellites.

The satellites provide signal coverage to the ground. The UE performs data transmission with the first base station through the satellite. The first base station may send the first polarization configuration information to the UE through a satellite in the communication connection.

The antenna polarization configuration associated with the data transmission may include but not limited to: the antenna polarization configuration adopted by the satellite and/or the UE when the UE performs data transmission with the satellite in the communication connection.

In one embodiment, the antenna polarization configuration includes at least one of: linear polarization, left hand circular polarization (LHCP), right hand circular polarization (RHCP), or circular polarization.

For example, the first polarization configuration information may be indicated by a predefined bit length. For example, when the antenna polarization configuration includes four configurations of the linear polarization, LHCP, RHCP and the circular polarization, the first polarization configuration information may be indicated by two-bit information. When there are more configuration types of antenna polarization configurations, more bits may be used to indicate the first polarization configuration information, and the bit length of the indication information may be configured based on supported antenna polarization configurations.

The UE may determine the antenna polarization configuration for the data communication between the satellite and the UE based on the antenna polarization configuration information, such that the antenna polarization configuration for the data transmission between the satellite and the UE is consistent. The satellite and the UE may use the same antenna polarization configuration to send and receive the data.

In this way, by sending the first polarization configuration information to the UE, on the one hand, the antenna polarization configuration indicating data transmission is realized to the UE; on the other hand, the communication between the UE and the satellite is consistent in the antenna polarization configuration, which reduces the situations where data transmission failure or bit error caused by the inconsistent antenna polarization configuration of the data transmission of the UE and the satellite, and improves the quality of data transmission.

In one embodiment, determining the antenna polarization configuration associated with the data transmission according to the first polarization configuration information includes:
according to the first polarization configuration information, determining at least one of:
an antenna polarization configuration for a downlink data transmission;
an antenna polarization configuration for an uplink data transmission.

The first polarization configuration information may indicate the antenna polarization configuration for the downlink data transmission or the antenna polarization configuration for the uplink data transmission alone, or may indicate both the antenna polarization configuration for the downlink data transmission and the antenna polarization configuration for the uplink data transmission.

The UE receive the first polarization configuration information to determine the antenna polarization configuration for downlink data transmission and/or the antenna polarization configuration for uplink data transmission.

The UE may receive downlink data based on the antenna polarization configuration for the downlink data transmission. The UE may send uplink data based on the antenna polarization configuration for the uplink data transmission.

Here, the downlink data received by the UE may be transmitted by the first base station through the satellite. The UE may send uplink data to the first base station through the satellite transmission.

In this way, by sending the first polarization configuration information to the UE, the uplink data transmission and/or the downlink data transmission between the UE and the satellite are consistent in the antenna polarization configuration, which reduces the situations where data transmission failure or bit error caused by the inconsistent antenna polarization configuration of the data transmission of the UE and the satellite, and improves the quality of data transmission.

In one embodiment, the method further includes:
determining the antenna polarization configuration for the downlink data transmission as the antenna polarization configuration for the uplink data transmission.

In response to the first polarization configuration information indicating only the antenna polarization configuration for the downlink data transmission, the UE may determine the antenna polarization configuration for the downlink data transmission as the antenna polarization configuration for the uplink data transmission.

In response to the antenna polarization configuration for the uplink data transmission indicated by the first polarization configuration information being unable to be adopted by the UE due to its own capabilities and other reasons, the UE may determine the antenna polarization configuration for the downlink data transmission as the antenna polarization configuration for the uplink data transmission. The UE determining the antenna polarization configuration for the uplink data transmission may indicate to the first base station the antenna polarization configuration determined by the UE for the uplink data transmission by reporting or other means.

In this way, the UE and the first base station may implement unified antenna polarization configurations for the uplink data transmission, and improve the quality of the uplink data transmission.

In one embodiment, the method further includes:
detecting an antenna polarization configuration for a predetermined downlink signal;
determining the detected antenna polarization configuration for the predetermined downlink signal as the antenna polarization configuration for the data transmission.

The base station may indicate the antenna polarization configuration implicitly. For example, the antenna polarization configuration adopted by the predetermined downlink signal is used as the antenna polarization configuration adopted by an instruction UE.

Here, the predetermined downlink signal includes but not limited to SSB. The antenna polarization configuration for data transmission includes: the antenna polarization configuration for the uplink data transmission and/or the antenna polarization configuration for the downlink data transmission.

The UE may determine the antenna polarization configuration implicitly. The UE may determine the antenna polarization configuration for the downlink data transmission by detecting the antenna polarization configuration of the predetermined downlink signal.

For example, the terminal may detect the antenna polarization configuration of the SSB, and determine the antenna polarization configuration adopted by the UE for the downlink data transmission. For example, the UE may use the same antenna polarization configuration as that on the SSB to receive downlink data.

In one embodiment, receiving the first polarization configuration information from the first base station includes one of:
receiving a main information block (MIB) carrying the first polarization configuration information;
receiving a system message carrying the first polarization configuration information;
receiving a high-layer signaling carrying the first polarization configuration information;
receiving a first initial access message carrying the first polarization configuration information;
receiving a physical layer signaling carrying the first polarization configuration information.

For example, in the initial access stage, the first base station may carry the first polarization configuration information through the MIB or the system information to indicate the antenna polarization configuration.

Here, the first initial access message may include but is not limited to message 2 (MSG2) sent by the base station when the UE performs initial access. In the initial access stage, the first base station may also use the MSG2 to carry the first polarization configuration information to indicate the antenna polarization configuration. In this way, after the UE sends the preamble, the UE determines the antenna polarization configuration for the downlink data transmission by receiving the first polarization configuration information carried by the MSG2. The antenna polarization configuration for the preamble sent by the UE may be predefined or notified by the base station through system information.

After the initial access phase, after the UE completes the initial access process, the base station may dynamically switch the antenna polarization configuration for the data transmission. The first base station may notify the antenna polarization configuration of this data transmission through the physical layer signaling and/or the high-layer signaling. Here, the physical layer signaling may include DCI and so on. For example, the first base station may add first polarization configuration information with a predetermined length or a configurable length on an information field at a predetermined position of the DCI for scheduling data transmission, so as to indicate the antenna polarization configuration of the UE. Here, the data transmission may include the uplink data transmission and/or the downlink data transmission.

In one embodiment, in response to receiving the MIB or the system message carrying the first polarization configuration information, determining the antenna polarization configuration associated with the data transmission according to the first polarization configuration information includes:
determining antenna polarization configurations of one or more service beams according to the first polarization configuration information.

The system information here may include system information block (SIB), etc.

When a service area of the first base station is configured with a plurality of beams, the MIB or the system information may include the antenna polarization configurations for the data transmission on one or more service beams.

For example, the MIB or the SIB information sent on one service beam may carry the antenna polarization configurations on all service beams of the serving cell, and the configuration information indicating the polarization direction on each service beam may be the same or different.

In another embodiment, the MIB or the SIB sent on each serving beam may only carry the antenna polarization configuration of this serving beam.

In one embodiment, the method further includes:
sending second polarization configuration information. The second polarization configuration information is configured to indicate an antenna polarization capability of the UE.

The base station may also determine the polarization configuration of the serving cell of the UE through the antenna polarization capability reported by the UE. The antenna polarization capability may be the antenna polarization configuration that the UE may adopt.

The UE may report the antenna polarization capability through the second polarization configuration information. The base station may determine the antenna polarization configuration that enables the UE to maintain normal traffic based on the polarization capabilities reported by the UE. For example, the UE reports that its polarization capability as the LHCP through the second polarization configuration information, and the base station may select the antenna polarization configuration of the serving cell of the UE as the LHCP. Here, the antenna polarization configuration may include: an antenna polarization configuration for an uplink data transmission and/or an antenna polarization configuration for an downlink data transmission.

In one embodiment, sending the second polarization configuration information includes:
sending a second initial access message carrying the second polarization configuration information.

Here, the second initial access message may include, but is not limited to, message 1 (MSG1) and/or message 3 (MSG3) sent by the UE when the UE performs initial access. In the initial access phase, the UE may carry the second polarization configuration information through MSG1 and/or MSG3. The first base station may determine the polarization capability of the UE based on the second polarization configuration information, and determine the antenna polarization configuration.

In one embodiment, the method further includes:
receiving reporting trigger information;

Sending the second polarization configuration information includes:
sending the second polarization configuration information in response to receiving the trigger information.

The base station may send the reporting trigger information after establishing a connection with the UE, and the reporting trigger information may indicate resource location and/or signaling format of the second polarization configuration information reported by the UE. The UE reports its own second polarization configuration information based on the reporting trigger information. The UE may report the second polarization configuration information through the resource location and/or the signaling format indicated by the reporting trigger information.

A specific example is provided below in combination with any of the above-mentioned embodiments.

A method for communicating antenna polarization configurations for an uplink data transmission and a downlink data transmission between a base station and a UE provided in an example includes the following steps.
1. The base station determines the antenna polarization configuration information.

The base station determines the antenna polarization configuration for the uplink data transmission and the downlink data transmission in its coverage area. The determination of the antenna polarization configuration for the uplink data transmission and the downlink data transmission in its coverage area may be based on implementation, or based on signaling interaction.

In one embodiment, the base station determines the antennas polarization configuration of the uplink and downlink data transmission in its coverage area through signaling interaction between the base stations. The base station determines an antenna polarization configuration of an adjacent cell via a wired or wireless interface between the base stations, and determines the antenna polarization configuration of this cell. For example, different antenna polarization configurations are used in the coverage area where mutual interference exists between the current cell and the neighboring cells.

In another embodiment, the base station may also determine the antenna polarization configuration of its serving cell by reporting the antenna polarization capabilities of the terminals. For example, in the polarization capabilities reported by terminals in a certain area, more than a certain proportion of terminals report LHCP, and the base station may configure the polarization configuration of LHCP in this area for data interaction.

A pattern of the antenna polarization configuration information is interacted between the base stations via the interfaces or between satellites via the ISL.

### 2. Indication of the antenna polarization configuration information

The antenna polarization configuration information may be indicated by a predefined bit length. For example, when the polarization configuration includes four configurations of the linear polarization, LHCP, RHCP and the circular polarization, it may be indicated by 2 bits of information. When there are more types of antenna polarization configurations, more bits may be used to indicate the antenna polarization configuration information, and the bit length of the indication information may be configured based on the supported antenna polarization configurations.

### 3. Notification of downlink data transmission antenna polarization configuration information

Notification of the antenna polarization configuration information for the downlink data transmission may be performed explicitly or implicitly.

### a. Display signaling notification

### 1) Initial access stage

The polarization manners on different beams are notified through the MIB or the system information.

When the service area of the base station is configured with a plurality of beams, the MIB or the system information may include the antenna polarization direction of the downlink data transmission on each service beam.

In one embodiment, the MIB or the SIB information sent on each service beam carries the antenna polarization configuration information on all service beams of the serving cell, and the antenna polarization configuration information indicated on each service beam is consistent. In another embodiment, the MIB or the SIB sent on each service beam only carries the antenna polarization configuration information on the service beam.

### Notification via MSG2

In this manner, after the terminal sends the preamble, the terminal determines the antenna polarization configuration for the downlink data transmission by receiving the indication information of MSG2. The antenna polarization configuration for sending the preamble by the terminal may be predefined or notified by the base station through system information.

### 2) After the initial access phase

After the terminal completes the initial access process, during the subsequent data reception process, based on the configuration information, if it is determined to support the transmission of dynamically switching polarization configurations, the base station may notify this data transmission or receive the antenna polarization configuration through the physical layer signaling. For example, an indication information with a predetermined length or a configurable length may be added to an information field of a predetermined position of the scheduled data transmission or the received DCI, so as to notify the terminal of the antenna polarization configuration information.

### b. Implicit notification

In this manner, the terminal determines the antenna polarization configuration in an implicit manner. For example, the terminal may determine the antenna polarization configuration for its downlink reception by detecting the antenna polarization configuration on predefined information. In one embodiment, the terminal may determine the antenna polarization configuration for its downlink data reception by detecting the antenna polarization configuration on the SSB. For example, the same antenna polarization configuration as on the SSB is used to receive subsequent downlink data.

### 4. Notification of uplink antenna polarization configuration information

a. The terminal reports its own polarization capability.

The terminal reports the antenna polarization capabilities supported by itself. The time that the terminal reports the information may be during the initial access process or after the initial access process is completed.

In one embodiment, the terminal reports its own polarization capability on MSG1 or MSG3.

In another embodiment, based on the trigger instruction sent by the base station, the terminal sends its own polarization capability at the corresponding indication position.

b. The terminal determines the polarization method for the uplink transmission based on the antenna polarization configuration information or the signaling notification of the DL.

The antenna polarization configuration for the uplink data transmission is by determined by the terminal in a similar way as determining the antenna polarization configuration for the downlink data transmission.

In one embodiment, the terminal determines the antenna polarization configuration for the downlink data transmission as the antenna polarization configuration for the uplink data transmission.

In another embodiment, the terminal determines the antenna polarization configuration notified by the base station as the antenna polarization configuration for the uplink data transmission. The signaling for notification of the downlink data transmission and the uplink data transmission may be carried in the same signaling or notified separately through individual signaling. The specific notification manner may refer to the manner for displaying the signaling notification of the downlink antenna polarization configuration information.

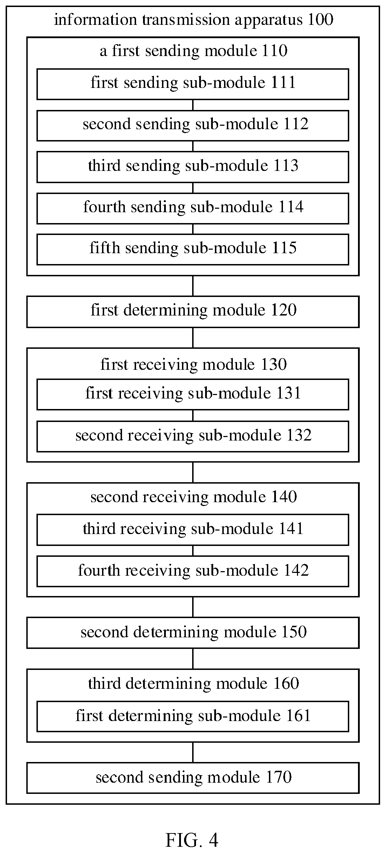

An embodiment of the present disclosure also provides an information transmission apparatus, which is applied in the first base station. As shown in FIG. 4, the information transmission apparatus 100 includes a first sending module 110.

The first sending module 110 is configured to send first polarization configuration information to a user equipment (UE). The polarization configuration information is configured to indicate an antenna polarization configuration associated with a data transmission.

In one embodiment, the first polarization configuration information is configured to indicate at least one of:
an antenna polarization configuration for a downlink data transmission;
an antenna polarization configuration for an uplink data transmission.

In one embodiment, the antenna polarization configuration includes at least one of:
linear polarization;
left hand circular polarization (LHCP);
right hand circular polarization (RHCP);
circular polarization.

In one embodiment, the first sending module 110 includes one of:
a first sending sub-module 111 configured to send a main information block (MIB) carrying the first polarization configuration information to the UE;
a second sending sub-module 112 configured to send a system message carrying the first polarization configuration information to the UE;
a third sending sub-module 113 configured to send a high-layer signaling carrying the first polarization configuration information to the UE;
a fourth sending sub-module 114 configured to send a first initial access message carrying the first polarization configuration information to the UE;
a fifth sending sub-module 115 configured to send a physical layer signaling carrying the first polarization configuration information to the UE.

In one embodiment, in response to sending the MIB or the system message carrying the first polarization configuration information, the first polarization configuration information is configured to indicate antenna polarization configurations of one or more service beams.

In one embodiment, the apparatus 100 further includes:
a first determining module 120 configured to determine an antenna polarization configuration of a cell associated with the first base station based on an antenna polarization configuration of a cell associated with a second base station in response to the cell associated with the first base station having overlapping coverage areas with the cell associated with the second base station.

In one embodiment, the apparatus 100 further includes:
a first receiving module 130 configured to receive, from the second base station, indication information indicating the antenna polarization configuration of the cell associated with the second base station.

In one embodiment, the first receiving module 130 includes at least one of:
a first receiving sub-module 131 configured to receive the indication information via an inter-base-station interface;
a second receiving sub-module 132 configured to receive the indication information via an inter-satellite communication link (ISL) associated with the first base station.

In one embodiment, the apparatus 100 further includes:
a second receiving module 140 configured to receive second polarization configuration information from the UE;
a second determining module 150 configured to determine an antenna polarization capability of the UE according to the second polarization configuration information;
a third determining module 160 configured to determine the antenna polarization configuration based on the antenna polarization capability reported by at least one UE in the cell associated with the first base station.

In one embodiment, the third determining module 160 includes:
a first determining sub-module 161 configured to determine the antenna polarization configuration based on a proportion of the UEs with the same antenna polarization capability in the cell associated with the first base station.

In one embodiment, the second receiving module 140 includes:
a third receiving sub-module 141 configured to receive a second initial access message carrying the second polarization configuration information.

In one embodiment, the apparatus 100 further includes:
a second sending module 170 configured to send reporting trigger information.

The second receiving module 140 includes:
a fourth receiving sub-module 142 configured to receive the second polarization configuration information sent by the UE in response to the trigger information.

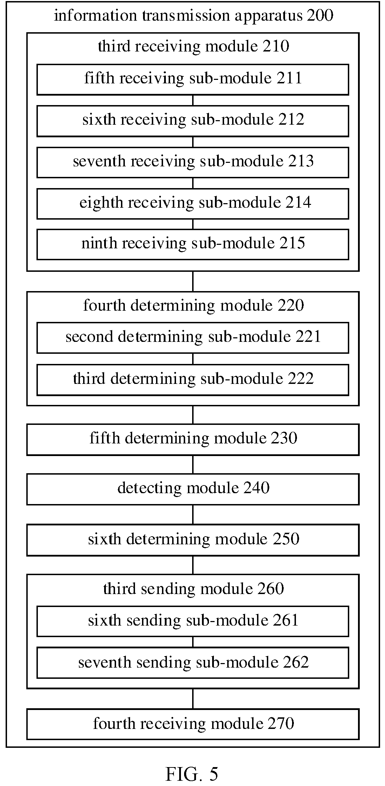

Embodiments of the present disclosure also provide an information transmission apparatus, which is applied to a UE. As shown in FIG. 5, the information transmission apparatus 200 includes a third receiving module 210 and a fourth determining module 220.

The third receiving module 210 is configured to receive first polarization configuration information from a first base station.

The fourth determining module 220 is configured to determine an antenna polarization configuration associated with a data transmission according to the first polarization configuration information.

In one embodiment, the fourth determining module 220 includes:
a second determining sub-module 221 configured to, according to the first polarization configuration information, determine at least one of:
an antenna polarization configuration for a downlink data transmission;
an antenna polarization configuration for an uplink data transmission.

In one embodiment, the apparatus 200 further includes:
a fifth determining module 230 configured to determine the antenna polarization configuration for the downlink data transmission as the antenna polarization configuration for the uplink data transmission.

In one embodiment, the apparatus 200 further includes:
a detecting module 240 configured to detect an antenna polarization configuration for a predetermined downlink signal;
a sixth determining module 250 configured to determine the detected antenna polarization configuration for the predetermined downlink signal as the antenna polarization configuration for the data transmission.

In one embodiment, the antenna polarization configuration includes at least one of:
linear polarization;
left hand circular polarization (LHCP);
right hand circular polarization (RHCP);
circular polarization.

In one embodiment, the third receiving module 210 includes one of:
a fifth receiving sub-module 211 configured to receive a main information block (MIB) carrying the first polarization configuration information;
a sixth receiving sub-module 212 configured to receive a system message carrying the first polarization configuration information;
a seventh receiving sub-module 213 configured to receive a high-layer signaling carrying the first polarization configuration information;
an eighth receiving sub-module 214 configured to receive a first initial access message carrying the first polarization configuration information;
a ninth receiving sub-module 215 configured to receive a physical layer signaling carrying the first polarization configuration information.

In one embodiment, in response to receiving the MIB or the system message carrying the first polarization configuration information, the fourth determining module 220 includes:
a third determining sub-module 222 configured to determine antenna polarization configurations of one or more service beams according to the first polarization configuration information.

In one embodiment, the apparatus 200 further includes:
a third sending module 260 configured to send second polarization configuration information. The second polarization configuration information is configured to indicate an antenna polarization capability of the UE.

In one embodiment, the third sending module 260 includes:
a sixth sending sub-module 261 configured to send a second initial access message carrying the second polarization configuration information.

In one embodiment, the apparatus 200 further includes:
a fourth receiving module 270 configured to receive reporting trigger information.

The third sending module 260 includes:
a seventh sending sub-module 262 configured to send the second polarization configuration information in response to receiving the trigger information.

In illustrative embodiments, the first sending module 110, the first determining module 120, the first receiving module 130, the second receiving module 140, the second determining module 150, the third determining module 160, the second sending module 170, the third receiving module 210, the fourth determining module 220, the fifth determining module 230, the detecting module 240, the sixth determining module 250, the third sending module 260 and the fourth receiving module 270 may be controlled by one or more central processing units (CPUs), graphics processor units (GPUs), baseband processors (BPs), application specific integrated circuits (ASICs), DSPs, programmable logic devices (PLDs), complex programmable logic device (CPLDs), field-programmable gate array (FPGAs), general-purpose processors, controllers, microcontroller units (MCUs) , microprocessors, or other electronic components for executing the above-mentioned method.

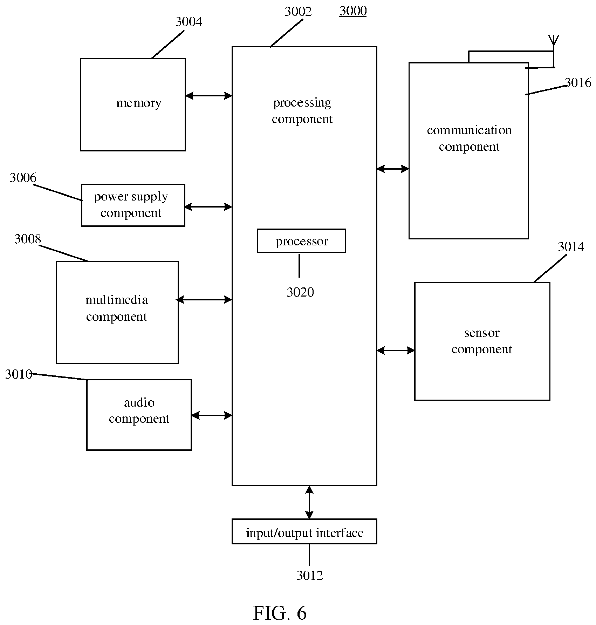

FIG. 6 is a block diagram of a device 3000 for information transmission according to an illustrative embodiment. For example, the device 3000 may be a mobile phone, a computer, a digital broadcast terminal, a messaging device, a game console, a tablet device, a medical device, a fitness device, a personal digital assistant, and the like.

Referring to FIG. 6, the device 3000 may include one or more of the following components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the overall operations of the device 3000, such as the operations associated with display, telephone calls, data communications, camera operations, and recording operations. The processing component 3002 may include one or more processors 3020 to execute instructions to complete all or part of the steps of the above-mentioned method. Additionally, the processing component 3002 may include one or more modules which facilitate the interaction between the processing component 3002 and other components. For example, the processing component 3002 may include a multimedia module to facilitate the interaction between the multimedia component 3008 and the processing component 3002.

The memory 3004 is configured to store various types of data to support the operation of the device 3000. Examples of such data include instructions for any application or methods operated on the device 3000, contact data, phonebook data, messages, pictures, videos, and the like. The memory 3004 may be implemented using any type of volatile or non-volatile storage device, or a combination thereof, such as a static random access memory (SRAM), an electrically erasable programmable read-only memory (EEPROM), an erasable programmable read only memory (EPROM), a programmable read only memory (PROM), a read-only memory (ROM), a magnetic memory, a flash memory, a magnetic or optical disk.

The power supply component 3006 provides power to various components of the device 3000. The power supply component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or a swipe action, but also sense awake time and a pressure associated with the touch or swipe action. In some embodiments, the multimedia component 3008 includes a front camera and/or a rear camera. The front camera and/or the rear camera may receive an external multimedia datum while the device 3000 is in an operation mode, such as a photographing mode or a video mode. Each of the front camera and the rear camera may be a fixed optical lens system or have focal and optical zoom capability.

The audio component 3010 is configured to output and/or input audio signals. For example, the audio component 3010 includes a microphone (MIC) configured to receive an external audio signal when the device 3000 is in an operation mode, such as a call mode, a recording mode and a voice recognition mode. The received audio signal may be further stored in the memory 3004 or transmitted via communication component 3016. In some embodiments, the audio component 3010 further includes a speaker to output audio signals.

The I/O interface 3012 provides an interface between the processing component 3002 and peripheral interface modules, such as keyboards, click wheels, buttons, and the like. These buttons may include, but are not limited to, a home button, a volume button, a starting button, and a locking button.

The sensor component 3014 includes one or more sensors to provide status assessments of various aspects of the device 3000. For example, the sensor component 3014 may detect an open/close status of the device 3000, relative positioning of components, e.g., the display and the keypad, of the device 3000, a change in position of the device 3000 or a component of the device 3000, a presence or absence of user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor or a temperature sensor.

The communication component 3016 is configured to facilitate communication, wired or wireless, between the device 3000 and other devices. The device 3000 may access a wireless network based on a communication standard, such as Wi-Fi, 2G or 3G, or a combination thereof. In illustrative embodiments, the communication component 3016 receives a broadcast signal or broadcast related information from an external broadcast management system via a broadcast channel. In illustrative embodiments, the communication component 3016 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 3000 may be implemented with one or more application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components, for performing the above-described method.

In illustrative embodiments, there is also provided a non-transitory computer-readable storage medium including instructions, such as included in the memory 3004, executed by the processor 3020 in the device 3000, for performing the above-mentioned method. For example, the non-transitory computer readable storage medium may be ROM, a random access memory (RAM), a CD-ROM, a magnetic tape, a floppy disk, an optical data storage device, and the like.

Other embodiments of the present disclosure will be apparent to those skilled in the art from consideration of the specification and practice of the present disclosure disclosed here. The present disclosure is intended to cover any variations, uses, or adaptations of embodiments of the present disclosure following the general principles thereof and including such departures from embodiments of the present disclosure as come within known or customary practice in the art. It is intended that the specification and the examples be considered as illustrative only, with a true scope and spirit of the embodiments of the present disclosure being indicated by the following claims.

It is appreciated that embodiments of the present disclosure are not limited to the exact construction that has been described above and illustrated in the accompanying drawings, and that various modifications and changes may be made without departing from the scope thereof. It is intended that the scope of embodiments of the present disclosure only be limited by the appended claims.

## Claims

1. An information transmission method, performed by a first base station and comprising:
sending first polarization configuration information to a user equipment (UE), wherein the polarization configuration information is configured to indicate an antenna polarization configuration associated with a data transmission.

2. The method according to claim 1, wherein the first polarization configuration information is configured to indicate at least one of:
an antenna polarization configuration for a downlink data transmission;
an antenna polarization configuration for an uplink data transmission.

3. The method according to claim 1, wherein the antenna polarization configuration comprises at least one of:
linear polarization;
left hand circular polarization (LHCP);
right hand circular polarization (RHCP);
circular polarization.

4. The method according to claim 1, wherein sending the first polarization configuration information to the UE comprises one of:
sending a main information block (MIB) carrying the first polarization configuration information to the UE;
sending a system message carrying the first polarization configuration information to the UE;
sending a high-layer signaling carrying the first polarization configuration information to the UE;
sending a first initial access message carrying the first polarization configuration information to the UE;
sending a physical layer signaling carrying the first polarization configuration information to the UE.

5. The method according to claim 4, wherein in response to sending the MIB or the system message carrying the first polarization configuration information, the first polarization configuration information is configured to indicate antenna polarization configurations of one or more service beams.

6. The method according to claim 1, further comprising:
determining an antenna polarization configuration of a cell associated with the first base station based on an antenna polarization configuration of a cell associated with a second base station in response to the cell associated with the first base station having overlapping coverage areas with the cell associated with the second base station.

7. The method according to claim 6, further comprising:
receiving, from the second base station, indication information indicating the antenna polarization configuration of the cell associated with the second base station.

8. The method according to claim 7, wherein receiving, from the second base station, the indication information indicating the antenna polarization configuration of the cell associated with the second base station comprises at least one of:
receiving the indication information via an inter-base-station interface;
receiving the indication information via an inter-satellite communication link (ISL) associated with the first base station.

9. The method according to any one of claims 1 to 8, further comprising:
receiving second polarization configuration information from the UE;
determining an antenna polarization capability of the UE according to the second polarization configuration information;
determining the antenna polarization configuration based on the antenna polarization capability reported by at least one UE in the cell associated with the first base station.

10. The method according to claim 9, wherein determining the antenna polarization configuration based on the antenna polarization capability reported by at least one UE in the cell associated with the first base station comprises:
determining the antenna polarization configuration based on a proportion of the UEs with the same antenna polarization capability in the cell associated with the first base station.

11. The method according to claim 9, wherein receiving the second polarization configuration information from the UE comprises:
receiving a second initial access message carrying the second polarization configuration information.

12. The method according to claim 9, further comprising:
sending reporting trigger information;
wherein receiving the second polarization configuration information from the UE comprises:
receiving the second polarization configuration information sent by the UE in response to the trigger information.

13. An information transmission method, performed by a user equipment (UE) and comprising:
receiving first polarization configuration information from a first base station;
determining an antenna polarization configuration associated with a data transmission according to the first polarization configuration information.

14. The method according to claim 13, wherein determining the antenna polarization configuration associated with the data transmission according to the first polarization configuration information comprises:
according to the first polarization configuration information, determining at least one of:
an antenna polarization configuration for a downlink data transmission;
an antenna polarization configuration for an uplink data transmission.

15. The method according to claim 14, further comprising:
determining the antenna polarization configuration for the downlink data transmission as the antenna polarization configuration for the uplink data transmission.

16. The method according to claim 13, further comprising:
detecting an antenna polarization configuration for a predetermined downlink signal;
determining the detected antenna polarization configuration for the predetermined downlink signal as the antenna polarization configuration for the data transmission.

17. The method according to claim 13, wherein the antenna polarization configuration comprises at least one of:
linear polarization;
left hand circular polarization (LHCP);
right hand circular polarization (RHCP);
circular polarization.

18. The method according to claim 13, wherein receiving the first polarization configuration information from the first base station comprises one of:
receiving a main information block (MIB) carrying the first polarization configuration information;
receiving a system message carrying the first polarization configuration information;
receiving a high-layer signaling carrying the first polarization configuration information;
receiving a first initial access message carrying the first polarization configuration information;
receiving a physical layer signaling carrying the first polarization configuration information.

19. The method according to claim 18, wherein in response to receiving the MIB or the system message carrying the first polarization configuration information, determining the antenna polarization configuration associated with the data transmission according to the first polarization configuration information comprises:
determining antenna polarization configurations of one or more service beams according to the first polarization configuration information.

20. The method according to any one of claims 13 to 19, further comprising:
sending second polarization configuration information, wherein the second polarization configuration information is configured to indicate an antenna polarization capability of the UE.

21. The method according to claim 20, wherein sending the second polarization configuration information comprises:
sending a second initial access message carrying the second polarization configuration information.

22. The method according to claim 20, further comprising:
receiving reporting trigger information;
wherein sending the second polarization configuration information comprises:
sending the second polarization configuration information in response to receiving the trigger information.

23. An information transmission apparatus, applied to a first base station and comprising:
a first sending module configured to send first polarization configuration information to a user equipment (UE), wherein the polarization configuration information is configured to indicate an antenna polarization configuration associated with a data transmission.

24. The apparatus according to claim 23, wherein the first polarization configuration information is configured to indicate at least one of:
an antenna polarization configuration for a downlink data transmission;
an antenna polarization configuration for an uplink data transmission.

25. The apparatus according to claim 23, wherein the antenna polarization configuration comprises at least one of:
linear polarization;
left hand circular polarization (LHCP);
right hand circular polarization (RHCP);
circular polarization.

26. The apparatus according to claim 23, wherein the first sending module comprises one of:
a first sending sub-module configured to send a main information block (MIB) carrying the first polarization configuration information to the UE;
a second sending sub-module configured to send a system message carrying the first polarization configuration information to the UE;
a third sending sub-module configured to send a high-layer signaling carrying the first polarization configuration information to the UE;
a fourth sending sub-module configured to send a first initial access message carrying the first polarization configuration information to the UE;
a fifth sending sub-module configured to send a physical layer signaling carrying the first polarization configuration information to the UE.

27. The apparatus according to claim 26, wherein in response to sending the MIB or the system message carrying the first polarization configuration information, the first polarization configuration information is configured to indicate antenna polarization configurations of one or more service beams.

28. The apparatus according to claim 23, further comprising:
a first determining module configured to determine an antenna polarization configuration of a cell associated with the first base station based on an antenna polarization configuration of a cell associated with a second base station in response to the cell associated with the first base station having overlapping coverage areas with the cell associated with the second base station.

29. The apparatus according to claim 28, further comprising:
a first receiving module configured to receive, from the second base station, indication information indicating the antenna polarization configuration of the cell associated with the second base station.

30. The apparatus according to claim 29, wherein the first receiving module comprises at least one:
a first receiving sub-module configured to receive the indication information via an inter-base-station interface;
a second receiving sub-module configured to receive the indication information via an inter-satellite communication link (ISL) associated with the first base station.

31. The apparatus according to any one of claims 23 to 30, further comprising:
a second receiving module configured to receive second polarization configuration information from the UE;
a second determining module configured to determine an antenna polarization capability of the UE according to the second polarization configuration information;
a third determining module configured to determine the antenna polarization configuration based on the antenna polarization capability reported by at least one UE in the cell associated with the first base station.

32. The apparatus according to claim 31, wherein the third determining module comprises:
a first determining sub-module configured to determine the antenna polarization configuration based on a proportion of the UEs with the same antenna polarization capability in the cell associated with the first base station.

33. The apparatus according to claim 31, wherein the second receiving module comprises:
a third receiving sub-module configured to receive a second initial access message carrying the second polarization configuration information.

34. The apparatus according to claim 31, further comprising:
a second sending module configured to send reporting trigger information;
wherein the second receiving module comprises:
a fourth receiving sub-module configured to receive the second polarization configuration information sent by the UE in response to the trigger information.

35. An information transmission apparatus, applied to a user equipment (UE) and comprising:
a third receiving module configured to receive first polarization configuration information from a first base station;
a fourth determining module configured to determine an antenna polarization configuration associated with a data transmission according to the first polarization configuration information.

36. The apparatus according to claim 35, wherein the fourth determining module comprises:
a second determining sub-module configured to, according to the first polarization configuration information, determine at least one of:
an antenna polarization configuration for a downlink data transmission;
an antenna polarization configuration for an uplink data transmission.

37. The apparatus according to claim 36, further comprising:
a fifth determining module configured to determine the antenna polarization configuration for the downlink data transmission as the antenna polarization configuration for the uplink data transmission.

38. The apparatus according to claim 35, further comprising:
a detecting module configured to detect an antenna polarization configuration for a predetermined downlink signal;
a sixth determining module configured to determine the detected antenna polarization configuration for the predetermined downlink signal as the antenna polarization configuration for the data transmission.

39. The apparatus according to claim 35, wherein the antenna polarization configuration comprises at least one of:
linear polarization;
left hand circular polarization (LHCP);
right hand circular polarization (RHCP);
circular polarization.

40. The apparatus according to claim 35, wherein the third receiving module comprises one of:
a fifth receiving sub-module configured to receive a main information block (MIB) carrying the first polarization configuration information;
a sixth receiving sub-module configured to receive a system message carrying the first polarization configuration information;
a seventh receiving sub-module configured to receive a high-layer signaling carrying the first polarization configuration information;
an eighth receiving sub-module configured to receive a first initial access message carrying the first polarization configuration information;
a ninth receiving sub-module configured to receive a physical layer signaling carrying the first polarization configuration information.

41. The apparatus according to claim 40, wherein in response to receiving the MIB or the system message carrying the first polarization configuration information, the fourth determining module comprises:
a third determining sub-module configured to determine antenna polarization configurations of one or more service beams according to the first polarization configuration information.

42. The apparatus according to any one of claims 35 to 41, further comprising:
a third sending module configured to send second polarization configuration information, wherein the second polarization configuration information is configured to indicate an antenna polarization capability of the UE.

43. The apparatus according to claim 42, wherein the third sending module comprises:
a sixth sending sub-module configured to send a second initial access message carrying the second polarization configuration information.

44. The apparatus according to claim 42, further comprising:
a fourth receiving module configured to receive reporting trigger information;
wherein the third sending module comprises:
a seventh sending sub-module configured to send the second polarization configuration information in response to receiving the trigger information.

45. A communication device, comprising:
a processor;
a memory; and
executable programs stored on the memory and runnable on the processor;
wherein the processor executes steps in the information transmission method according to any one of claims 1 to 12 or claims 13 to 22 when running the executable programs.

46. A storage medium having stored therein executable programs that, when executed by a processor, cause steps of the information transmission method according to any one of claims 1 to 12 or 13 to 22 to be implemented.
